# EUROPÄISCHE PATENTSCHRIFT

(11) **EP 2 765 286 B1**
(45) Veröffentlichungstag und Bekanntmachung des Hinweises auf die Patenterteilung: **15.08.2018**
(21) Anmeldenummer: 14153919.7
(22) Anmeldetag: 05.02.2014
(51) Int. Cl.: F28F 9/02, F28F 21/06, F28F 27/02, F28D 7/16, F28F 1/12, F02B 29/04, F02B 31/06

(54) **Frischluftversorgungseinrichtung einer Brennkraftmaschine**
Fresh air supply device of an internal combustion engine
Dispositif d'alimentation en air frais d'un moteur à combustion interne

(30) Priorität: 07.02.2013 DE 102013202056
(43) Veröffentlichungstag der Anmeldung: 13.08.2014
(73) Patentinhaber: Mahle International GmbH, 70376 Stuttgart (DE)
(72) Erfinder: Bruggesser, Veit, 71157 Hildrizhausen (DE); Morgillo, Ivano, 71543 Neuhütten (DE); Stehlig, Juergen, 72654 Neckartenzlingen (DE); Fischer, Oliver, 71384 Weinstadt (DE)
(74) Vertreter: BRP Renaud & Partner mbB Rechtsanwälte Patentanwälte Steuerberater

(56) Entgegenhaltungen:
- EP-A2- 0 079 217
- EP-B1- 0 343 565
- DE-A1-102006 043 526
- DE-A1-102009 025 282
- FR-A1- 2 923 859
- US-A- 4 693 084

## Beschreibung

Die vorliegende Erfindung betrifft eine Frischluftversorgungseinrichtung zum Zuführen von Frischluft zu einer Brennkraftmaschine.

Bei einer aufgeladenen Brennkraftmaschine wird die der Brennkraftmaschine zuzuführende Frischluft auf ein erhöhtes Druckniveau gebracht, wozu eine entsprechende Aufladeeinrichtung vorgesehen ist, beispielsweise in Form eines Rootsgebläses oder in Form einer Turbine, vorzugsweise eines Abgasturboladers. Durch die Aufladung der Frischluft, also durch deren Kompression erfolgt gleichzeitig eine Erwärmung der so gebildeten Ladeluft. Zur Verbesserung des Verbrennungsprozesses und insbesondere zur Erhöhung des Massenstroms ist es üblich, in einer Frischluftversorgungseinrichtung stromab einer Ladeeinrichtung einen Ladeluftkühler anzuordnen, um die aufgeladene Frischluft, also die Ladeluft zu kühlen.

Zur Integration eines derartigen Ladeluftkühlers in eine solche Frischluftversorgungseinrichtung kann ein Ladeluftkühler mit seinem Gehäuse in eine Unterbrechung eines Ladeluftkanals eingesetzt werden, so dass das Gehäuse des Ladeluftkühlers einen Abschnitt des Ladeluftkanals bildet. Ebenso ist es möglich, den Ladeluftkühler mit seinem Gehäuse in ein Luftansaugmodul oder kurz Saugmodul einzusetzen, das sich am motorseitigen Ende der Frischluftversorgungseinrichtung an den Ladeluftkanal anschließt und von dem aus die Verteilung der Ladeluft auf die einzelnen Brennräume der Brennkraftmaschine erfolgt. In beiden Fällen sind aufwändige Dichtungsmaßnahmen erforderlich, um Leckagen zu vermeiden.

Derartige Frischluftversorgungseinrichtungen sind zum Beispiel aus EP 0 343 565 und US 4,693,084 bekannt.

Die vorliegende Erfindung beschäftigt sich mit dem Problem, für eine Frischluftanlage der eingangs genannten Art eine verbesserte Ausführungsform anzugeben, die sich insbesondere durch eine vergleichsweise preiswerte Realisierbarkeit auszeichnet.

Dieses Problem wird erfindungsgemäß durch den Gegenstand der unabhängigen Ansprüche gelöst. Vorteilhafte Ausführungsformen sind Gegenstand der abhängigen Ansprüche.

Die Erfindung beruht auf dem allgemeinen Gedanken, ein Gehäuse des Saugmoduls durch zumindest zwei Gehäuseschalen zu bilden, wobei ein Ladeluftkühler in eine der Gehäuseschalen eingesetzt ist. Die Gehäuseschale, welche den Ladeluftkühler aufnimmt, wird nachfolgend als Kühlerschale bezeichnet. Die andere Gehäuseschale wird nachfolgend als Anschlussschale bezeichnet. Das Gehäuse weist einen Ladelufteinlass für ungekühlte Ladeluft und einen Ladeluftauslass für gekühlte Ladeluft auf. Der Ladelufteinlass ist in die Kühlerschale integriert, die eine Montageöffnung aufweist, durch die der Ladeluftkühler in die Kühlerschale eingesetzt ist. Mit Hilfe der Anschlussschale ist das Gehäuse derart verschlossen, dass der Ladeluftkühler in dem Gehäuse fixiert ist. Zu diesem Zweck ist die Anschlussschale im Bereich der Montageöffnung an die Kühlerschale luftdicht angebaut. Durch den erfindungsgemäßen Vorschlag lässt sich der Ladeluftkühler besonders einfach in das Gehäuse einsetzen. Außerdem kann für den Ladeluftkühler eine einfache und somit preiswerte Konstruktion gewählt werden. Bemerkenswert ist, dass die Teilung des Gehäuses zur Ausbildung der Kühlerschale und der Anschlussschale so gewählt ist, dass der Ladelufteinlass ausschließlich an der Kühlerschale ausgebildet ist, so dass er in seiner Umfangsrichtung ungeteilt ausgeführt werden kann. Hierdurch vereinfacht sich ein luftdichtes Anschließen an eine andere Komponente der Frischluftversorgungseinrichtung, welche die aufgeladene Frischluft dem Saugmodul zuführt. Beispielsweise kann es sich bei dieser Komponente um einen Verdichter eines Abgasturboladers oder um eine andere Aufladeeinrichtung handeln. Ebenso kann auch der Ladeluftauslass an der Anschlussschale oder auch an der Kühlerschale angeordnet sein, derart, dass er in Umfangsrichtung ungeteilt ist und dementsprechend einfach an eine nachfolgende Komponente angeschlossen werden kann. Ferner kann die Teilung des Gehäuses entlang einer Ebene erfolgen, wodurch sich ein dichtes Verbinden der beiden Schalen vereinfacht. Beispielsweise kann ein Schweißverfahren, insbesondere ein Reibschweißen oder Heißgasschweißen oder Infrarotschweißen, theoretisch auch ein Ultraschallschweißen, besonders einfach durchgeführt werden.

Entsprechend einer vorteilhaften Ausführungsform kann der Ladeluftkühler mehrere in ihrer Längsrichtung parallel zueinander verlaufende Rohre und mehrere mit den Rohren wärmeübertragend verbundene Kühlrippen aufweisen, wobei eine Montagerichtung, in der der Ladeluftkühler durch die Montageöffnung in die Kühlerschale eingesetzt ist, senkrecht zur Längsrichtung der Rohre verläuft. Mit anderen Worten, der Ladeluftkühler wird bezüglich der Längsrichtung der Rohre quer in die Kühlerschale eingesetzt. Da hierbei nur vergleichsweise wenig Einschubweg erforderlich ist, reduziert sich der Aufwand zur Führung sowie für die Erhaltung von Toleranzen.

Bei einer anderen vorteilhaften Ausführungsform kann die Kühlerschale in einem von der Montageöffnung entfernten Bereich eine zur Montageöffnung offene Einschubkontur aufweisen, in die eine beim Einsetzen des Ladeluftkühlers vorausgehende, außenliegende Steckkontur des Ladeluftkühlers in der Montagerichtung eintaucht. Auf diese Weise kann eine Art Labyrinth-Dichtung zwischen dem Gehäuse und dem Ladeluftkühler realisiert werden, die an dieser Seite eine Bypassströmung zur Umgehung des Ladeluftkühlers innerhalb des Gehäuses behindert. Einschubkontur und Steckkontur können dabei wie eine Nut-Feder-Verbindung zusammenwirken, die sich durch eine einfache Geometrie und eine effiziente formschlüssige Kopplung auszeichnet. Beispielsweise kann der Ladeluftkühler an zwei voneinander abgewandten Seiten jeweils eine Endplatte aufweisen, die mit außenliegenden Kühlrippen wärmeübertragend verbunden sind. Die jeweilige Steckkontur des Ladeluftkühlers kann dabei durch einen Rand einer solchen Endplatte gebildet sein. Grundsätzlich kann es ausreichen, nur an einer Seite des Ladeluftkühlers eine derartige formschlüssige Kopplung zwischen Einschubkontur und Steckkontur zu realisieren, beispielsweise an einer Unterseite oder an einer Oberseite des Ladeluftkühlers. Bevorzugt ist eine Ausführungsform, bei der sowohl an der Unterseite als auch an der Oberseite jeweils eine derartige formschlüssige Kopplung mittels einer Einschubkontur und einer Steckkontur realisiert ist.

Gemäß einer anderen vorteilhaften Ausführungsform kann die Anschlussschale eine der Montageöffnung zugewandte Anschlagkontur aufweisen, an der eine Abstützkontur des Ladeluftkühlers entgegen der Montagerichtung zur Anlage kommt. Durch diese Bauweise wird durch das Montieren der Anschlussschale an der Kühlerschale die Relativlage des Ladeluftkühlers im Gehäuse fixiert, zumindest bezüglich der luftseitigen Durchströmungsrichtung des Ladeluftkühlers. Durch diese Bauweise kann auf separate Fixierungsmittel verzichtet werden, um den Ladeluftkühler im Gehäuse zu fixieren. Die Abstützkontur kann wieder durch einen Rand einer Endplatte des Ladeluftkühlers gebildet sein. Grundsätzlich kann es ausreichen, nur an einer Seite, an der Oberseite oder an der Unterseite des Ladeluftkühlers, eine derartige Abstützung zwischen Anschlagkontur und Abstützkontur zu realisieren. Bevorzugt ist jedoch eine Ausführungsform, bei der sowohl an der Oberseite als auch an der Unterseite eine derartige Kontaktierung zwischen Anschlagkontur und Abstützkontur verwirklicht ist. Die jeweilige Kontaktierung zwischen Anschlagkontur und Abstützkontur kann gleichzeitig als Bypassdichtung konzipiert sein, um eine Umströmung des Ladeluftkühlers im Gehäuse zu vermeiden.

Bei einer anderen vorteilhaften Ausführungsform kann die Kühlerschale den Ladeluftkühler in einer Umfangsrichtung an drei Seiten umschließen, während die vierte Seite im Bereich der Montageöffnung angeordnet ist. Vorzugsweise ist die vierte Seite des Ladeluftkühlers noch innerhalb der Montageöffnung angeordnet, so dass der Ladeluftkühler entgegen der Montagerichtung nicht durch die Montageöffnung über die Kühlerschale vorsteht. Hierdurch lässt sich die Kühlerschale besonders einfach mit hoher Steifigkeit und Stabilität ausstatten, um den gesamten Ladeluftkühler hinreichend fest zu umschließen und zu fixieren.

Bei einer anderen vorteilhaften Ausführungsform kann die Anschlussschale über eine Nut-Feder-Verbindung mit der Kühlerschale in Kontakt stehen. Mittels einer derartigen Nut-Feder-Verbindung lässt sich eine besonders intensive Abdichtung an der jeweiligen Verbindungsstelle realisieren. Gleichzeitig ergibt sich dadurch auch quer zur Montagerichtung eine formschlüssige Verbindung, die relativ große Kräfte übertragen kann. Zweckmäßig kann diese Nut-Feder-Verbindung in der Umfangsrichtung entlang der gesamten Montageöffnung geschlossen umlaufen. Optional kann in die Nut-Feder-Verbindung eine Dichtung integriert sein. Zusätzlich oder alternativ kann im Bereich der Nut-Feder-Verbindung eine Schweißverbindung zwischen Anschlussschale und Kühlerschale vorgesehen sein.

Im Betrieb der Frischluftversorgungseinrichtung führt der Ladedruck auch im Gehäuse des Saugmoduls zu einem signifikanten Druckanstieg, was zu einer das Gehäuse aufblasenden bzw. aufweitenden Verformung des Gehäuses führen kann. Hierdurch wird zum einen die Dauerfestigkeit des Gehäuses gefährdet. Zum anderen kann dadurch im Gehäuse ein luftseitiger Bypass zur Umgehung des Ladeluftkühlers entstehen. Erfindungsgemäß ist daher an der Kühlerschale zumindest ein anströmseitiger Zuganker integral ausgeformt. Dieser Zuganker fist bezüglich der Strömungsrichtung der Ladeluft an bzw. im Bereich einer Anströmseite des Ladeluftkühlers angeordnet. Der jeweilige Zuganker verbindet dabei zwei Wandabschnitte der Kühlerschale, die sich an der Anströmseite des Ladeluftkühlers gegenüberliegen. Auf diese Weise können Kräfte, die im Betrieb im Saugmodul auftreten, von der Kühlerschale und somit vom Gehäuse besser aufgenommen werden, wodurch das Gehäuse bzw. das Saugmodul eine erhöhte Stabilität besitzt. Somit dient die Kühlerschale nicht nur zur Unterbringung des Ladeluftkühlers, sondern trägt in Verbindung mit dem jeweiligen Zuganker wesentlich zur Stabilität, insbesondere zur Formstabilität, des Gehäuses bzw. des Saugmoduls bei.

Entsprechend einer vorteilhaften Weiterbildung kann zumindest ein solcher Zuganker anströmseitig als Leitschaufel für die Ladeluft ausgestaltet sein, wobei sich die jeweilige Leitschaufel gekrümmt in einem, den Ladelufteinlass aufweisenden Einlassbereich der Kühlerschale erstreckt, derart, dass sie die vom Ladelufteinlass kommende Ladeluft in Richtung Ladeluftkühler umlenkt. Insbesondere kann zumindest eine solche Leitschaufel so konfiguriert sein, dass sie eine 90°-Umlenkung der Ladeluftströmung bewirkt.

Bei einer anderen vorteilhaften Ausführungsform kann an der Anschlussschale zumindest ein abströmseitiger Zuganker integral ausgeformt sein, der bezüglich der Strömungsrichtung der Ladeluft im Bereich bzw. an einer Abströmseite des Ladeluftkühlers angeordnet ist. Der jeweilige Zuganker verbindet dabei zwei Wandabschnitte der Anschlussschale miteinander, die sich an der Abströmseite des Ladeluftkühlers gegenüberliegen. Auf diese Weise kann auch über die Anschlussschale eine Aufnahme von Kräften erfolgen, die im Betrieb innerhalb des Saugmoduls wirken können. Somit dient die Anschlussschale nicht nur zum Verschließen der Kühlerschale, sondern trägt in Verbindung mit dem jeweiligen Zuganker wesentlich zur Stabilität, insbesondere zur Formstabilität, des Gehäuses bzw. des Saugmoduls bei. Insbesondere kann das Saugmodul somit anströmseitig in der Kühlerschale und abströmseitig in der Anschlussschale jeweils über wenigstens einen Zuganker stabilisiert werden, wodurch das Gehäuse einen wichtigen Beitrag zur Stabilität des Saugmoduls leistet.

Bei einer anderen vorteilhaften Ausführungsform kann der Ladeluftkühler einen Einlassanschluss zum Zuführen eines Kühlmittels aufweisen, der durch einen bezüglich des Ladeluftkühlers und bezüglich des Saugmoduls separaten Einlassstutzen gebildet ist. Dieser separate Einlassstutzen kann nun durch eine im Gehäuse des Saugmoduls ausgebildete Einlassdurchgangsöffnung hindurch in eine am Ladeluftkühler ausgebildete Einlassöffnung hineinragen. Die Einlassdurchgangsöffnung befindet sich dabei zweckmäßig an der Kühlerschale. Die Einlassöffnung des Ladeluftkühlers mündet vorzugsweise in einer Einlasskammer oder Verteilerkammer, von der aus mehrere Rohre des Ladeluftkühlers abgehen. Zusätzlich oder alternativ kann der Ladeluftkühler einen Auslassanschluss zum Abführen eines Kühlmittels aufweisen, der durch eine bezüglich des Ladeluftkühlers und bezüglich des Saugmoduls separaten Einlassstutzen gebildet ist. Dieser separate Einlassstutzen kann durch eine im Gehäuse, vorzugsweise in der Kühlerschale, ausgebildete Auslassdurchgangsöffnung hindurch in eine am Ladeluftkühler ausgebildete Auslassöffnung hineinragen. Dabei kann diese Auslassöffnung in eine Auslasskammer oder Sammelkammer des Ladeluftkühlers münden, die fluidisch mit mehreren Rohren verbunden ist. Die Einlasskammer und die Auslasskammer können nebeneinander an derselben Seite des Ladeluftkühlers angeordnet sein. An einer davon entfernten, gegenüberliegenden Seite des Ladeluftkühlers befindet sich dann zweckmäßig eine Umlenkkammer, in die einerseits die an die Einlasskammer angeschlossenen Rohre und andererseits die an die Auslasskammer angeschlossenen Rohre einmünden. Durch den separaten Einlassstutzen und den separaten Auslassstutzen ist es besonders einfach möglich, den Ladeluftkühler durch die Montageöffnung in die Kühlerschale einzusetzen. Zweckmäßig werden die genannten Stutzen erst nach dem Einsetzen des Ladeluftkühlers durch die jeweilige Durchgangsöffnung montiert, so dass sie beim Einführen des Ladeluftkühlers keine Störkontur bilden.

Entsprechend einer vorteilhaften Weiterbildung kann der Einlassstutzen wenigstens eine Dichtung aufweisen, die den Einlassstutzen in der Einlassöffnung gegenüber dem Ladeluftkühler, also gegenüber dem Kühlmittel, dichtet. Zusätzlich oder alternativ kann der Einlassstutzen auch eine Dichtung aufweisen, die den Einlassstutzen in der Einlassdurchgangsöffnung gegenüber dem Gehäuse, also gegenüber der Ladeluft, dichtet. Zusätzlich oder alternativ kann der Auslassstutzen eine Dichtung aufweisen, die den Auslassstutzen in der Auslassöffnung gegenüber dem Ladeluftkühler, also gegenüber dem Kühlmittel, dichtet. Zusätzlich oder alternativ kann der Auslassstutzen eine Dichtung aufweisen, die den Auslassstutzen in der Auslassdurchgangsöffnung gegenüber dem Gehäuse, also gegenüber der Ladeluft, dichtet.

Bei einer anderen vorteilhaften Ausführungsform kann im Bereich des Ladeluftauslasses eine Klappeneinrichtung an die Anschlussschale angebaut sein. Eine derartige Klappeneinrichtung kann für mehrere Brennräume der Brennkraftmaschine jeweils wenigstens eine Klappe zum Steuern eines Ladeluftstroms aufweisen. Derartige Klappen können beispielsweise als Tumbleklappen oder als Drallklappen ausgestaltet sein. Mit Hilfe einer derartigen Klappeneinrichtung wird der Bauumfang der Frischluftversorgungseinrichtung vergrößert, wodurch eine Vormontage vereinfacht und der Aufwand zum Montieren der Frischluftversorgungseinrichtung mit der Klappeneinrichtung am Zylinderkopf der Brennkraftmaschine reduziert wird.

Die Kühlerschale und die Anschlussschale sind zweckmäßig Spritzformteile, die aus Kunststoff spritzgeformt sind.

Zumindest die Kühlerschale kann an ihrer Außenseite intensiv verrippt sein, wodurch sie eine hohe Steifigkeit besitzt. Auf diese Weise lassen sich vergleichsweise große Druckkräfte im Gehäuse aufnehmen.

Gemäß einer anderen vorteilhaften Ausführungsform kann das Saugmodul, bzw. können das Gehäuse und somit die Kühlerschale und die Anschlussschale aus Kunststoff hergestellt sein, während der Ladeluftkühler aus Metall hergestellt ist. Insbesondere sind beim Ladeluftkühler die Rohre, die Rippen und die Endplatten sowie gegebenenfalls vorhandene Kappen zur Ausbildung der vorstehend genannten Verteilerkammer, Sammelkammer und Umlenkkammer aus Metall hergestellt. Bevorzugt werden dabei Leichtmetalle bzw. Metalllegierungen oder Leichtmetalllegierungen.

Die aus Kunststoff hergestellten Schalen werden zweckmäßig über eine Schweißverbindung, vorzugsweise über Reibschweißen bzw. Vibrationsschweißen, aneinander befestigt, wobei gleichzeitig die gewünschte Gasdichtigkeit realisierbar ist.

Bei einer anderen vorteilhaften Ausführungsform kann eine Hauptströmungsrichtung der Ladeluft im Ladeluftkühler parallel zur Montagerichtung verlaufen, dazu jedoch entgegengesetzt orientiert sein.

Bei einer anderen Ausführungsform kann die Kühlerschale in einem von der Montageöffnung entfernten Bereich wenigstens eine Fixierungsrippe aufweisen, die sich parallel zur Längsrichtung der Rohre erstreckt, die entgegen der Montagerichtung absteht und dabei zwischen benachbarten Rohren in den Ladeluftkühler hineinragt. Über eine derartige Fixierungsrippe lässt sich der Ladeluftkühler vergleichsweise einfach im Gehäuse positionieren. Gleichzeitig wird mit Hilfe der jeweiligen Fixierungsrippe, die sich quer zur Hauptströmungsrichtung der Ladeluft im Saugmodul erstreckt, eine Abdichtung zwischen Ladeluftkühler und Gehäuse erreicht, um einen luftseitigen Bypass zu vermeiden, der eine luftseitige Umgehung des Ladeluftkühlers im Gehäuse ermöglicht.

Ebenso ist es grundsätzlich möglich, auch an der Anschlussschale wenigstens eine derartige Fixierungsrippe anzuordnen, die sich dann ebenfalls parallel zur Längsrichtung der Rohre erstreckt, dann jedoch in der Montagerichtung absteht und zwischen benachbarten Rohren in den Ladeluftkühler hineinragt.

Bei einer anderen Ausführungsform können Ladelufteinlass und Ladeluftauslass an der Kühlerschale angeordnet sein, so dass die Anschlussschale letztlich nur einen Verschluss für die Montageöffnung bildet. In diesem Fall ist die Hauptströmungsrichtung der Ladeluft im Ladeluftkühler senkrecht zur Montagerichtung orientiert.

Bei einer vorteilhaften Bauform können der Ladelufteinlass, der Einlassanschluss und der Auslassanschluss an derselben Seite des Gehäuses bzw. der Kühlerschale nebeneinander angeordnet sein. Auf diese Weise vereinfacht sich eine Leitungsführung für die Ladeluft und das Kühlmittel.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine isometrische Ansicht einer Frischluftversorgungseinrichtung,
- Fig. 2: eine isometrische Schnittansicht der Frischluftversorgungseinrichtung,
- Fig. 3: eine isometrische Schnittansicht einer Kühlerschale der Frischluftversorgungseinrichtung,
- Fig. 4: ein vergrößertes Detail IV in Fig. 3,
- Fig. 5: eine andere isometrische Schnittansicht der Kühlerschale,
- Fig. 6: eine weitere isometrische Schnittansicht der Kühlerschale,
- Fig. 7: ein vergrößertes Detail VII aus Fig. 6,
- Fig. 8: eine stark vereinfachte Schnittansicht einer weiteren, nicht beanspruchten Ausführungsform der Frischluftversorgungseinrichtung.

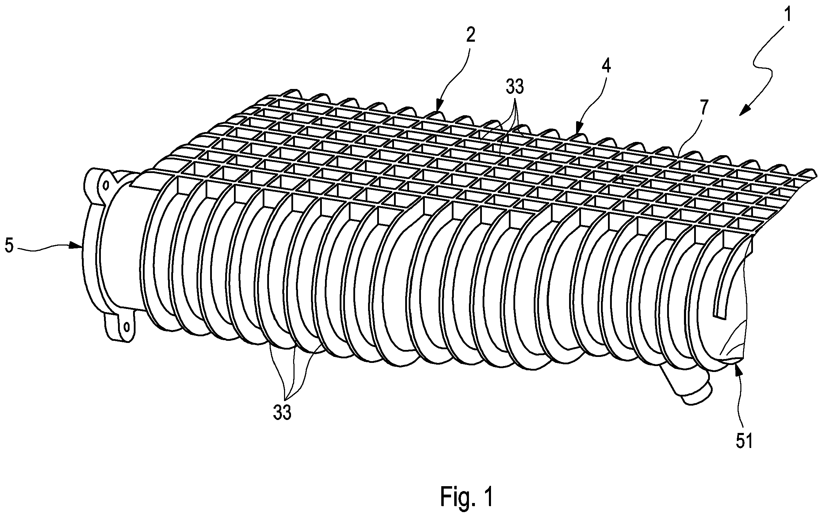

Entsprechend den Figuren 1 bis 8 umfasst eine Frischluftversorgungseinrichtung 1, mit deren Hilfe Frischluft einer Brennkraftmaschine zugeführt werden kann, ein Saugmodul 2, mit dessen Hilfe aufgeladene Frischluft geführt werden kann. Das Saugmodul 2 besitzt somit eine für Ladeluft ausreichende Druckstabilität. Das Saugmodul 2 befindet sich an einem der Brennkraftmaschine zugeordneten Ende der Frischluftversorgungseinrichtung 1 und ist dabei eingangsseitig an einen Ladeluftkanal angeschlossen, der zu einer Ladeeinrichtung, insbesondere zu einem Verdichter eines Abgasturboladers, führt. Im Saugmodul 2 ist ein Ladeluftkühler 3 angeordnet, mit dessen Hilfe die aufgeladene Frischluft, also die Ladeluft gekühlt werden kann. Das Saugmodul 2 besitzt ein Gehäuse 4 bzw. ist durch ein Gehäuse 4 gebildet. Das Gehäuse 4 weist einen Ladelufteinlass 5 für ungekühlte Ladeluft und einen Ladeluftauslass 6 für gekühlte Ladeluft auf.

Das Gehäuse 4 weist eine Kühlerschale 7 und eine Anschlussschale 8 auf, die auf geeignete Weise zusammengebaut sind und so das Gehäuse 4 bilden. Das Gehäuse 4 ist im gezeigten Fall somit zweiteilig konzipiert, so dass es im Wesentlichen nur die Kühlerschale 7 und die Anschlussschale 8 umfasst.

Die Kühlerschale 7 weist den Ladelufteinlass 5 auf und enthält den Ladeluftkühler 3. Ferner weist die Kühlerschale 7 eine Montageöffnung 9 auf, die bezüglich der Strömungsrichtung der Ladeluft stromab des Ladeluftkühlers 3 angeordnet ist. Die Montageöffnung 9 ist so dimensioniert, dass der Ladeluftkühler 3 durch die Montageöffnung 9 in die Kühlerschale 7 eingesetzt werden kann. Die Anschlussschale 8 weist bei der Ausführungsform der Figuren 1 bis 7 den Ladeluftauslass 6 auf. Ferner ist die Anschlussschale 8 im Bereich der Montageöffnung 9 an die Kühlerschale 7 luftdicht angebaut. Die Ladeluft strömt somit vom Ladelufteinlass 5 innerhalb der Kühlerschale 7 bis zur Montageöffnung 9 und tritt dort in die Anschlussschale 8 ein, die sie über den Ladeluftauslass 6 verlässt.

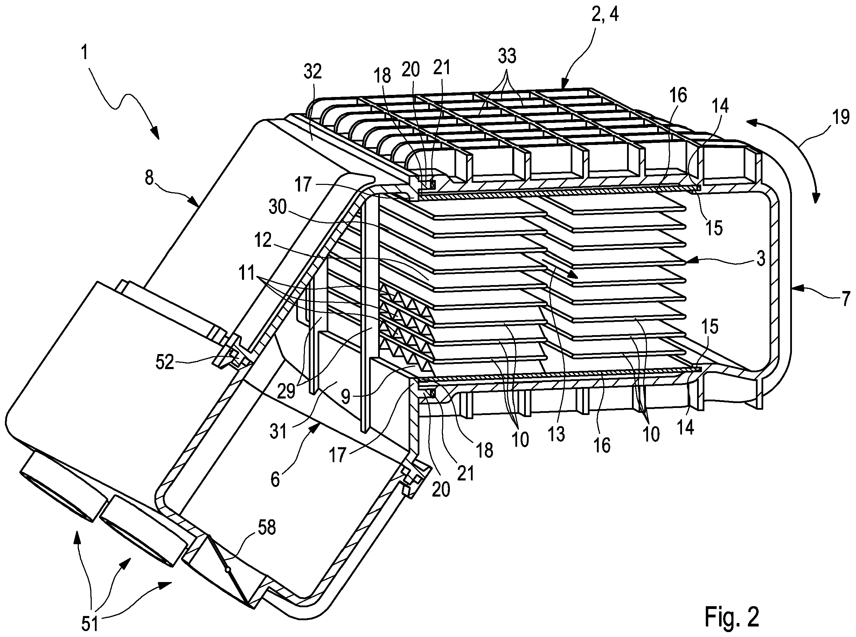

Der Ladeluftkühler 3 ist als Rohr-Rippen-Wärmetauscher konzipiert und umfasst mehrere, in ihrer Längsrichtung parallel zueinander verlaufende Rohre 10. Außerdem sind mehrere, nur in Figur 2 angedeutete Kühlrippen 11 vorgesehen, die mit den Rohren 10 wärmeübertragend verbunden sind. Zweckmäßig sind dabei Rohre 10 und Kühlrippen 11 einander abwechselnd aufeinander geschichtet. Eine zum Beispiel in Figur 2 durch einen Pfeil angedeutete Montagerichtung 12, in welcher der Ladeluftkühler 3 durch die Montageöffnung 9 in die Kühlerschale 7 eingesetzt werden kann, verläuft senkrecht zur Längsrichtung der Rohre 10, die zum Beispiel in Figur 2 durch einen Pfeil 13 angedeutet ist.

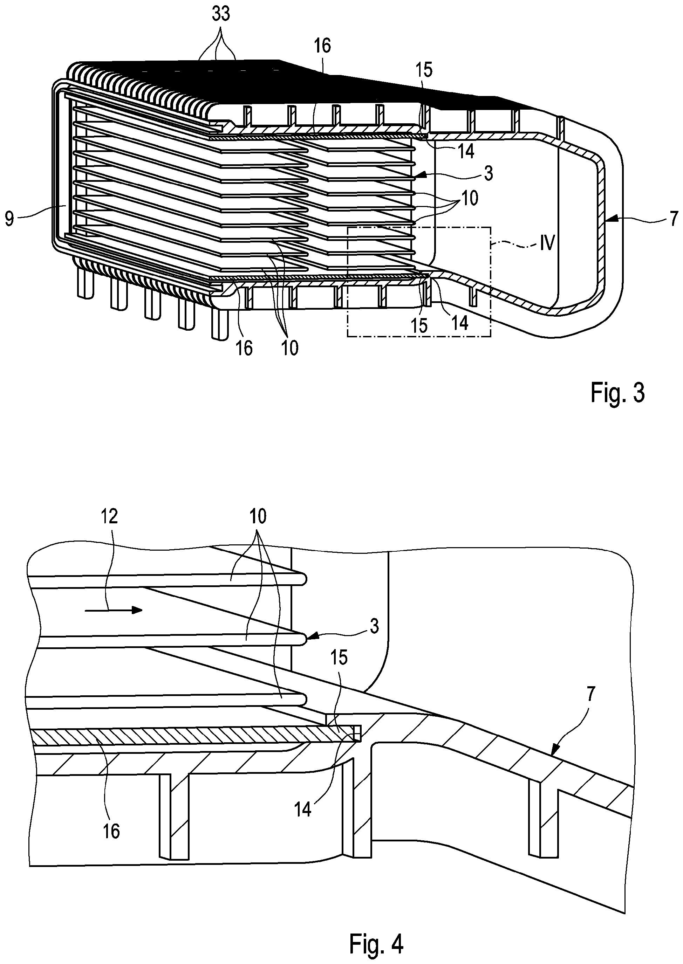

Wie sich in den Figuren 2 und 3 und insbesondere Figur 4 entnehmen lässt, kann die Kühlerschale 7 in einem von der Montageöffnung 9 entfernten Bereich, also an einer luftseitigen Anströmseite des Ladeluftkühlers 3 zumindest eine Einschubkontur 14 aufweisen, die zur Montageöffnung 9 hin offen ist. Der Ladeluftkühler 3 weist nun zweckmäßig eine zur Einschubkontur 14 komplementäre Steckkontur 15 auf, die sich an der Anströmseite des Ladeluftkühlers 3 befindet, so dass sie beim Einsetzen des Ladeluftkühlers 3 in die Kühlerschale 7 vorausgeht. Im montierten Zustand taucht die jeweilige Steckkontur 15 in die zugehörige Einschubkontur 14 in der Montagerichtung 12 ein. Die Einschubkontur 14 und die Steckkontur 15 wirken hier als Nut-Feder-Verbindung zusammen. Die Steckkontur 15 ist durch einen anströmseitigen Rand einer Endplatte 16 gebildet, die einen aus den Rohren 10 und den Kühlrippen 11 gebildeten Kühlerblock an zwei voneinander abgewandten Seiten begrenzt. Durch den formschlüssigen Eingriff zwischen Steckkontur 15 und Einschubkontur 14 ergibt sich eine effiziente Bypassdichtung, die eine Umströmung des Ladeluftkühlers 3 hinsichtlich der Ladeluft behindert. Da hier zwei derartige Einschubkonturen 14 und Steckkonturen 15 vorhanden sind, kann an beiden Seiten, also an beiden Endplatten 16 eine Bypassdichtung für den Ladeluftkühler 3 realisiert werden.

Wie sich insbesondere aus Figur 2 ergibt, kann die Anschlussschale 8 wenigstens eine Anschlagkontur 17 aufweisen, die der Montageöffnung 9 zugewandt ist. Nach dem Einsetzen des Ladeluftkühlers 3 in die Kühlerschale 7 wird die Anschlussschale 8 an die Kühlerschale 7 angebaut. Hierbei kommt die jeweilige Anschlagkontur 17 an einer dazu komplementären Abstützkontur 18 des Ladeluftkühlers 3 entgegen der Montagerichtung 12 zur Anlage. Im Beispiel sind die beiden Abstützkonturen 18 jeweils durch einen abströmseitigen Rand der zuvor genannten Endplatten 16 gebildet. Durch das Zusammenwirken der Anschlagkonturen 17 und der Abstützkonturen 18 ergibt sich eine intensive Lagefixierung des Ladeluftkühlers 3 innerhalb des Gehäuses 4, die insbesondere eine Vorspannung des Ladeluftkühlers 3 im Gehäuse 4 bewirken kann. Das Zusammenwirken der jeweiligen Anschlagkontur 17 und der jeweiligen Abstützstruktur 18 bewirkt ebenfalls eine Bypassdichtung.

Bei den hier gezeigten Ausführungsformen ist der Ladeluftkühler 3 vollständig innerhalb der Kühlerschale 7 angeordnet, so dass die Kühlerschale 7 den Ladeluftkühler 3 in einer Umfangsrichtung, die in Figur 2 durch einen Doppelpfeil 19 angedeutet ist, an drei Seiten umschließt. Dies sind in Figur 2 die Oberseite, die Unterseite und die rechte Seite. Im Unterschied dazu ist die vierte Seite, also in Figur 2 die linke Seite des Ladeluftkühlers 3 in der Montageöffnung 9 angeordnet.

Wie sich Figur 2 ferner entnehmen lässt, ist die Anschlussschale 8 hier über eine Nut-Feder-Verbindung 20 mit der Kühlerschale 7 kontaktiert. Diese Nut-Feder-Verbindung 20 ist entlang der Montageöffnung 9 vollständig geschlossen umlaufend ausgebildet, um eine effiziente Abdichtung der beiden Schalen 7, 8 aneinander zu realisieren. Die Nut-Feder-Verbindung 20 führt auch zu einer intensiven Aussteifung des durch die beiden Schalen 7, 8 gebildeten Gehäuses 4. Im Bereich der Nut-Feder-Verbindung 20 lässt sich insbesondere eine Schweißverbindung zwischen den beiden Schalen 7, 8 herstellen. Optional kann innerhalb der Nut-Feder-Verbindung 20 eine Dichtung 21 angeordnet sein.

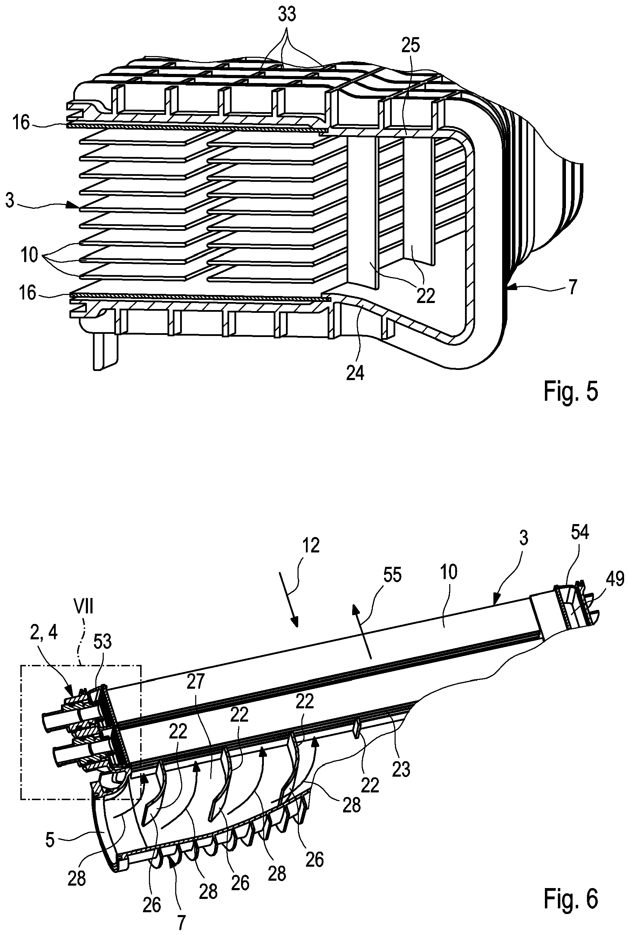

Wie sich insbesondere den Figuren 5 und 6 entnehmen lässt, können an der Kühlerschale 7 mehrere anströmseitige Zuganker 22 vorgesehen sein, die zweckmäßig integral an der Kühlerschale 7 ausgeformt sind. Diese Zuganker 22 sind an einer luftseitigen Anströmseite 23 des Ladeluftkühlers 3 angeordnet. Dabei verbinden die Zuganker 22 zwei Wandabschnitte 24, 25 der Kühlerschale 7 miteinander, die sich an der Anströmseite 23 des Ladeluftkühlers 3 gegenüberliegen. Wie sich Figur 6 entnehmen lässt, können einige dieser Zuganker 22 anströmseitig als Leitschaufeln für die Ladeluft ausgestaltet sein. Die jeweilige Leitschaufel ist in Figur 6 mit 26 bezeichnet. Sie ist gekrümmt und erstreckt sich in einen Einlassbereich 27 der Kühlerschale 7 hinein, der den Ladelufteinlass 5 aufweist. Die Leitschaufeln 26 sind hierbei so gekrümmt, dass sie hier etwa eine 90°-Umlenkung der vom Ladelufteinlass 5 kommenden Ladeluft in Richtung Ladeluftkühler 3 bewirken. Pfeile 28 deuten dabei die Ladeluftströmung an.

Figur 2 deutet an, dass auch an der Anschlussschale 8 abströmseitige Zuganker 29 vorhanden sein können, die zweckmäßig integral an der Anschlussschale 8 ausgeformt sein können. Der jeweilige abströmseitige Zuganker 29 ist dabei bezüglich der Strömungsrichtung der Ladeluft an einer Abströmseite 30 des Ladeluftkühlers 3 angeordnet. Dabei verbindet der jeweilige abströmseitige Zuganker 29 zwei Wandabschnitte 31, 32 der Anschlussschale 8 miteinander, die sich an der Abströmseite 30 des Ladeluftkühlers 3 gegenüberliegen.

Die anströmseitigen Zuganker 22 und die abströmseitigen Zuganker 29 führen zu einer intensiven Aussteifung des Gehäuses 4 beiderseits des Ladeluftkühlers 3.

Somit können Druckkräfte, die im Betrieb innerhalb des Ladeluftkühlers 3 entstehen können, vom Gehäuse 4 aufgenommen werden. Zur Stabilisierung des Gehäuses 4 kann außerdem vorgesehen sein, dass die Kühlerschale 7 an ihrer Außenseite mit einer Vielzahl von Versteifungsrippen 33 ausgestattet ist, die senkrecht zueinander verlaufen können und somit eine intensive Aussteifung der Kühlerschale 7 bewirken.

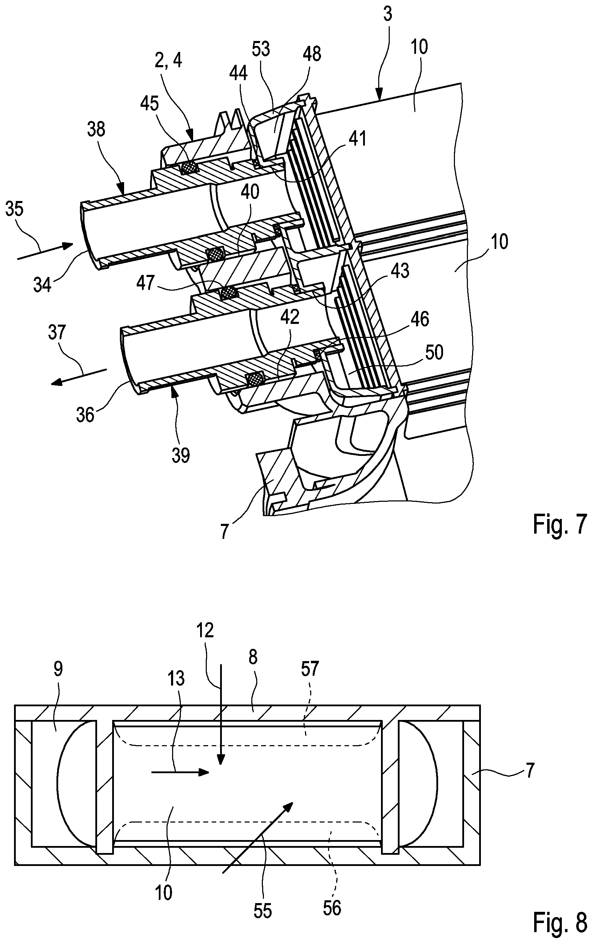

Wie sich den Figuren 6 und 7 entnehmen lässt, besitzt der Ladeluftkühler 3 einen Einlassanschluss 34 zum Zuführen eines Kühlmittels gemäß einem Pfeil 35. Ebenso ist ein Auslassanschluss 36 zum Abführen des Kühlmittels gemäß einem Pfeil 37 vorgesehen. Der Einlassanschluss 34 ist dabei durch einen Einlassstutzen 38 gebildet, der bezüglich des Ladeluftkühlers 3 und bezüglich des Saugmoduls 2 ein separates Bauteil bildet. Auch der Auslassanschluss 36 ist hier durch ein separates Bauteil gebildet, nämlich durch einen Auslassstutzen 39. Der Einlassstutzen 38 ist durch eine im Gehäuse 4 ausgebildete Einlassdurchgangsöffnung 40 in eine Einlassöffnung 41 des Ladeluftkühlers 3 eingesteckt. Der Auslassstutzen 39 ist durch eine im Gehäuse 4 ausgebildete Auslassdurchgangsöffnung 42 in eine Auslassöffnung 43 eingesteckt, die am Ladeluftkühler 3 ausgebildet ist. Eine erste einlassseitige Dichtung 44 dichtet den Einlassstutzen 38 gegenüber dem Ladeluftkühler 3 im Bereich der Einlassöffnung 41. Eine zweite einlassseitige Dichtung 45 dichtet den Einlassstutzen 38 gegenüber dem Gehäuse 4 im Bereich der Einlassdurchgangsöffnung 40. Eine erste auslassseitige Dichtung 46 dichtet den Auslassstutzen 39 gegenüber dem Ladeluftkühler 3 im Bereich der Auslassöffnung 43. Eine zweite auslassseitige Dichtung 47 dichtet den Auslassstutzen 39 gegenüber dem Gehäuse 4 im Bereich der Auslassdurchgangsöffnung 42. Die jeweilige erste Dichtung 44, 46 trennt somit das Kühlmittel von der Ladeluft. Die jeweilige zweite Dichtung 45, 47 trennt somit die Ladeluft von Umgebungsluft.

Die Einlassöffnung 41 mündet in eine Einlasskammer 48 oder Verteilerkammer 48, die über eine erste Gruppe von Rohren 10 mit einer in Figur 6 erkennbaren Umlenkkammer 49 fluidisch verbunden ist. Diese Umlenkkammer 49 ist dann über eine zweite Gruppe von Rohren 10 mit einer Auslasskammer 50 oder Sammelkammer 50 fluidisch verbunden, in welche die Auslassöffnung 43 mündet.

Wie sich der Figur 1 entnehmen lässt, kann bei der in den Figuren 1 bis 7 gezeigten bevorzugten Ausführungsform die Frischluftversorgungseinrichtung 1 außerdem mit einer Klappeneinrichtung 51 ausgestattet sein, die im Bereich des Ladeluftauslasses 6 an die Anschlussschale 8 angebaut ist. Die Klappeneinrichtung 51 kann als Tumble-, Drall- oder Swirl-Klappeneinrichtung ausgeführt sein. Entsprechende Klappen sind dabei in Fig. 2 mit 58 bezeichnet. Auch hier kann wieder eine entlang des Ladeluftauslasses 6 geschlossen vollständig umlaufende Nut-Feder-Verbindung 52 und/oder eine Schweißverbindung vorgesehen sein, um die Klappeneinrichtung 51 luft- und druckdicht mit der Anschlussschale 8 und somit mit dem Gehäuse 4 zu verbinden.

Bei der in den Figuren 1 bis 7 gezeigten Ausführungsform dient die Anschlussschale 7 zum Anschließen des Saugmoduls 2 an einen Zylinderkopf einer Brennkraftmaschine oder zum Anschließen an die Klappeneinrichtung 51, die ihrerseits zum Anschließen an den Zylinderkopf vorgesehen ist.

Das Saugmodul 2 ist aus Kunststoff hergestellt. Dementsprechend sind das Gehäuse 4 und folglich die Kühlerschale 7 und die Anschlussschale 8 aus Kunststoff hergestellt. Der Ladeluftkühler 3 ist dagegen aus Metall hergestellt. Insbesondere sind somit die Rohre 10, die Rippen 11 und die Endplatten 16 aus Metall hergestellt. Des Weiteren können auch eine erste Kappe 53 zur Realisierung der Einlasskammer 48 und der Auslasskammer 50 sowie eine zweite Kappe 54 zur Realisierung der Umlenkkammer 49 aus Metall hergestellt sein. Die Anschlussstutzen 38, 39 können bevorzugt aus Kunststoff hergestellt sein. Grundsätzlich lassen sich hier jedoch auch metallische Anschlussstutzen 38, 39 verwenden.

Bei der in den Figuren 1 bis 7 gezeigten Ausführungsform ist die Hauptströmungsrichtung der Ladeluft im Ladeluftkühler 3, die zum Beispiel in Figur 6 durch einen Pfeil 55 angedeutet ist, parallel zur Montagerichtung 12, jedoch dazu entgegengesetzt orientiert.

Im Unterschied dazu zeigt Figur 8 eine nicht beanspruchte Ausführungsform, bei welcher die Hauptströmungsrichtung 55 der Ladeluft senkrecht zur Montagerichtung 12 orientiert ist. Bei der in Figur 8 gezeigten Ausführungsform weist die Kühlerschale 7 in einem von der Montageöffnung 9 entfernten Bereich zumindest eine Fixierungsrippe 56 auf, die sich parallel zur Längsrichtung 13 der Rohre 10 erstreckt und die entgegen der Montagerichtung 12 von der Kühlerschale 7 absteht. Dabei ragt die jeweilige Fixierungsrippe 56 in den Kühlerblock, nämlich zwischen zwei benachbarten Rohren 10 in den Ladeluftkühler 3 hinein. Bei der in Figur 8 gezeigten Ausführungsform ist außerdem an der Anschlussschale 8 ebenfalls wenigstens eine derartige Fixierungsrippe 57 vorgesehen, die in der Montagerichtung 12 absteht und ebenfalls zwischen benachbarten Rohren 10 in den Ladeluftkühler 3 hineinragt. Bei der in Figur 8 gezeigten Ausführungsform sind der nicht gezeigte Ladelufteinlass 5 und der nicht gezeigte Ladeluftauslass 6 jeweils an der Kühlerschale 7 angeordnet.

## Patentansprüche

1. Frischluftversorgungseinrichtung zum Zuführen von Frischluft zu einer Brennkraftmaschine,
- mit einem Saugmodul (2) zum Führen von aufgeladener Frischluft,
- mit einem im Saugmodul (2) angeordneten Ladeluftkühler (3) zum Kühlen der aufgeladenen Frischluft,
- wobei das Saugmodul (2) ein Gehäuse (4) mit einem Ladelufteinlass (5) für ungekühlte Ladeluft und mit einem Ladeluftauslass (6) für gekühlte Ladeluft aufweist,
- wobei das Gehäuse (4) eine Kühlerschale (7) aufweist, die den Ladelufteinlass (5) aufweist, die den Ladeluftkühler (3) enthält und die eine Montageöffnung (9) aufweist, die bezüglich einer Strömungsrichtung (55) der Ladeluft stromab des Ladeluftkühlers (3) angeordnet ist und durch die der Ladeluftkühler (3) in die Kühlerschale (7) eingesetzt ist,
- wobei das Gehäuse (4) eine Anschlussschale (8) aufweist, die den Ladeluftauslass (6) aufweist und die im Bereich der Montageöffnung (9) an die Kühlerschale (7) luftdicht angebaut ist,
- **dadurch gekennzeichnet, dass** an der Kühlerschale (7) wenigstens ein anströmseitiger Zuganker (22) integral ausgeformt ist, der bezüglich der Strömungsrichtung (55) der Ladeluft an einer Anströmseite (23) des Ladeluftkühlers (3) angeordnet ist und der zwei Wandabschnitte (24, 25), die sich an der Anströmseite (23) des Ladeluftkühlers (3) gegenüberliegen, miteinander verbindet.

2. Einrichtung nach Anspruch 1,
**dadurch gekennzeichnet,**
**dass** der Ladeluftkühler (3) mehrere in ihrer Längsrichtung (13) parallel zueinander verlaufende Rohre (10) und mehrere mit den Rohren (10) wärmeübertragend verbundene Kühlrippen (11) aufweist, wobei eine Montagerichtung (12), in der der Ladeluftkühler (3) durch die Montageöffnung (9) in die Kühlerschale (7) eingesetzt ist, senkrecht zur Längsrichtung (13) der Rohre (10) verläuft.

3. Einrichtung nach Anspruch 1 oder 2,
**dadurch gekennzeichnet,**
**dass** die Kühlerschale (7) in einem von der Montageöffnung (9) entfernten Bereich wenigstens eine zur Montageöffnung (9) offene Einschubkontur (14) aufweist, in die eine beim Einsetzen des Ladeluftkühlers (3) vorausgehende Steckkontur (15) des Ladeluftkühlers (3) in der Montagerichtung (12) eintaucht.

4. Einrichtung nach einem der Ansprüche 1 bis 3, **dadurch gekennzeichnet,**
**dass** die Anschlussschale (8) wenigstens eine der Montageöffnung (9) zugewandte Anschlagkontur (17) aufweist, an der eine Abstützkontur (18) des Ladeluftkühlers (3) entgegen der Montagerichtung (12) zur Anlage kommt.

5. Einrichtung nach einem der Ansprüche 1 bis 4,
**dadurch gekennzeichnet,**
**dass** die Kühlerschale (7) den Ladeluftkühler (3) in einer Umfangsrichtung (19) an drei Seiten umschließt, während die vierte Seite im Bereich der Montageöffnung (9) angeordnet ist.

6. Einrichtung nach einem der Ansprüche 1 bis 5,
**dadurch gekennzeichnet,**
**dass** die Anschlussschale (8) über eine Nut-Feder-Verbindung (20) mit der Kühlerschale (7) in Kontakt steht.

7. Einrichtung nach einem der Ansprüche 1 bis 6,
**dadurch gekennzeichnet,**
**dass** zumindest ein solcher Zuganker (22) anströmseitig als Leitschaufel (26) für die Ladeluft ausgestaltet ist, die sich gekrümmt in einem den Ladelufteinlass (5) aufweisenden Einlassbereich (27) erstreckt und vom Ladelufteinlass (5) kommende Ladeluft in Richtung Ladeluftkühler (3) umlenkt.

8. Einrichtung nach einem der Ansprüche 1 bis 7,
**dadurch gekennzeichnet,**
**dass** an der Anschlussschale (8) wenigstens ein abströmseitiger Zuganker (29) integral ausgeformt ist, der bezüglich der Strömungsrichtung (55) der Ladeluft an einer Abströmseite (30) des Ladeluftkühlers (3) angeordnet ist und der zwei Wandabschnitte (31, 32), die sich an der Abströmseite (30) des Ladeluftkühlers (3) gegenüberliegen, miteinander verbindet.

9. Einrichtung nach einem der Ansprüche 1 bis 8,
**dadurch gekennzeichnet,**
- **dass** der Ladeluftkühler (3) einen Einlassanschluss (34) zum Zuführen eines Kühlmittels (35) aufweist, der durch einen bezüglich des Ladeluftkühlers (3) und bezüglich des Saugmoduls (2) separaten Einlassstutzen (38) gebildet ist, der durch eine im Gehäuse (4) des Saugmoduls (2) ausgebildete Einlassdurchgangsöffnung (40) hindurch in eine am Ladeluftkühler (3) ausgebildete Einlassöffnung (41) hineinragt, und/oder
- **dass** der Ladeluftkühler (3) einen Auslassanschluss (36) zum Abführen eines Kühlmittels (37) aufweist, der durch einen bezüglich des Ladeluftkühlers (3) und bezüglich des Saugmoduls (2) separaten Auslassstutzen (39) gebildet ist, der durch eine im Gehäuse (4) ausgebildete Auslassdurchgangsöffnung (42) hindurch in eine am Ladeluftkühler (3) ausgebildete Auslassöffnung (43) hineinragt.

10. Einrichtung nach einem der Ansprüche 1 bis 9,
**dadurch gekennzeichnet,**
**dass** im Bereich des Ladeluftauslasses (6) eine Klappeneinrichtung (51) an die Anschlussschale (8) angebaut ist.

11. Einrichtung nach einem der Ansprüche 1 bis 10,
**dadurch gekennzeichnet,**
**dass** das Saugmodul (2) aus Kunststoff hergestellt ist, während der Ladeluftkühler (3) aus Metall hergestellt ist.

12. Einrichtung nach einem der Ansprüche 1 bis 11,
**dadurch gekennzeichnet,**
**dass** eine Hauptströmungsrichtung (55) der Ladeluft im Ladeluftkühler (3) parallel zur Montagerichtung (12) verläuft, dazu jedoch entgegengesetzt orientiert ist.

13. Einrichtung nach einem der Ansprüche 1 bis 12,
**dadurch gekennzeichnet,**
**dass** die Kühlerschale (7) in einem von der Montageöffnung (9) entfernten Bereich wenigstens eine Fixierungsrippe (56) aufweist, die sich parallel zur Längsrichtung (13) der Rohre (10) erstreckt, die entgegen der Montagerichtung (12) absteht und die zwischen benachbarten Rohren (10) in den Ladeluftkühler (3) hineinragt.

## Claims

1. A fresh air supply device for feeding fresh air to an internal combustion engine,
- with a suction module (2) for conducting supercharged fresh air,
- with a charge air cooler (3) arranged in the suction module (2) for cooling the supercharged fresh air,
- wherein the suction module (2) comprises a housing (4) with a charge air inlet (5) for uncooled charge air and with a charge air outlet (6) for cooled chargeair,
- wherein the housing (4) comprises a cooler shell (7), which comprises the charge air inlet (5), which contains the charge air cooler (3) and which comprises an assembly opening (9), which with respect to a flow direction (55) of the charge air is arranged downstream of the charge air cooler (3) and through which the charge air cooler (3) is inserted into the cooler shell (7),
- wherein the housing (4) comprises a connecting shell (8), which comprises the charge air outlet (6) and which in the region of the assembly opening (9) is attached to the cooler shell (7) in an air-tight manner,
**characterized in**
**that** on the cooler shell (7) at least one tensile anchor (22) is integrally formed on the onflow side, which with respect to the flow direction (55) of the charge air is arranged on an onflow side (23) of the charge air cooler (3) and which connects two wall portions (24, 25), which are located opposite one another on the onflowside (23) of the charge air cooler (3), to one another.

2. The device according to Claim 1,
**characterized in**
**that** the charge air cooler (3) comprises a plurality of tubes (10) which in their longitudinal direction (13) run parallel to one another and a plurality of cooling fins(11) which are connected to the tubes (10) in a heat-transferring manner, wherein an assembly direction (12), in which the charge air cooler (3) is inserted into the cooler shell (7) through the assembly opening (9) runs perpendicularly to the longitudinal direction (13) of the tubes (10).

3. The device according to Claim 1 or 2,
**characterized in**
**that** the cooler shell (7) in a region that is distal from the assembly opening (9) comprises at least one receiving contour (14) that is open towards the assembly opening (9), into which a leading plug contour (15) of the charge air cooler (3) dips in the assembly direction (12) when inserting the charge air cooler (3).

4. The device according to any one of the Claims 1 to 3,
**characterized in**
**that** the connecting shell (8) comprises at least one stop contour (17) facing the assembly opening (9), against which a support contour (18) of the charge air cooler (3) comes to bear opposite to the assembly direction (12).

5. The device according to any one of the Claims 1 to 4,
**characterized in**
**that** the cooler shell (7) encloses the charge air cooler (3) in a circumferential direction (19) on three sides, while the fourth side is arranged in the region of the assembly opening (9).

6. The device according to any one of the Claims 1 to 5,
**characterized in**
**that** the connecting shell (8) is in contact with the cooler shell (7) via a tongue and groove connection (20).

7. The device according to one of Claims 1 to 6,
**characterized in**
**that** at least one such tensile anchor (22) on the onflow side is configured as guide blade (26) for the charge air, which extends curved in an inlet region (27) comprising the charge air inlet (5) and redirects charge air coming from the charge air inlet (5) in the direction of the charge air cooler (3).

8. The device according to any one of the Claims 1 to 7,
**characterized in**
**that** on the connecting shell (8) at least one tensile anchor (29) on the outflow side is integrally formed, which with respect to the flow direction (55) of the charge air is arranged on an outflow side (30) of the charge air cooler (3) and which connects two wall portions (31, 32), which are located opposite one another on the outflow side (30) of the charge air cooler (3).

9. The device according to any one of the Claims 1 to 8,
**characterized in**
- **that** the charge air cooler (3) comprises an inlet connection (34) for feeding in a coolant (35), which is formed by an inlet connector (38) that is separate with respect to the charge air cooler (3) and with respect to the suction module (2), which projects into an inlet opening (41) formed on the charge air cooler (3) through an inlet passage opening (40) formed in the housing (4) of the suction module (2), and/or
- **that** the charge air cooler (3) comprises an outlet connection (36) for discharging a coolant (37), which is formed by an outlet connector (39) that is separate with respect to the charge air cooler (3) and with respect to the suction module (2), which projects into an outlet opening (43) formed on the charge air cooler (3) through an outlet passage opening (42) formed in the housing (4).

10. The device according to any one of the Claims 1 to 9,
**characterized in**
**that** in the region of the charge air outlet (6) a flap device (51) is attached to the connecting shell (8).

11. The device according to any one of the Claims 1 to 10,
**characterized in**
**that** the suction module (2) is produced from plastic, while the charge air cooler (3) is produced from metal.

12. The device according to any one of the Claims 1 to 11,
**characterized in**
**that** a main flow direction (55) of the charge air in the charge air cooler (3) runs parallel to the assembly direction (12), however is orientated opposite thereto.

13. The device according to any one of the Claims 1 to 12,
**characterized in**
**that** the cooler shell (7) in a region that is distal from the assembly opening (9) comprises at least one fixing rib (56), which extends parallel to the longitudinal direction (13) of the tubes (10), which projects opposite to the assembly direction (12) and which projects into the charge air cooler (3) between adjacent tubes (10).

## Revendications

1. Dispositif d'alimentation en air frais pour amener de l'air frais à un moteur à combustion interne,
- avec un module d'aspiration (2) destiné à amener de l'air frais de suralimentation,
- avec un refroidisseur d'air de suralimentation (3) agencé dans le module d'aspiration (2) et destiné à refroidir l'air frais de suralimentation,
- dans lequel le module d'aspiration (2) comporte un carter (4) avec une entrée d'air de suralimentation (5) pour de l'air de suralimentation non refroidi et avec une sortie d'air de suralimentation (6) pour de l'air de suralimentation refroidi,
- dans lequel le carter (4) comporte une coque de refroidisseur (7), qui comporte l'entrée d'air de suralimentation (5), qui contient le refroidisseur d'air de suralimentation (3) et qui comporte une ouverture de montage (9) qui est agencée en aval du refroidisseur d'air de suralimentation (3) par rapport à un sens d'écoulement (55) de l'air de suralimentation et à travers laquelle le refroidisseur d'air de suralimentation (3) est placé dans la coque de refroidisseur (7),
- dans lequel le carter (4) comporte une coque de raccordement (8), qui comporte la sortie d'air de suralimentation (6) et qui est montée de manière étanche à l'air au niveau de la coque de refroidisseur (7) dans la zone de l'ouverture de montage (9),
- **caractérisé en ce qu'**au moins un tirant d'ancrage (22) côté amont est formé de manière intégrée sur la coque de refroidisseur (7), lequel tirant d'ancrage est agencé au niveau d'un côté amont (23) du refroidisseur d'air de suralimentation (3) par rapport au sens d'écoulement (55) de l'air de suralimentation et assemble deux parties de paroi (24, 25) qui se font face au niveau du côté amont (23) du refroidisseur d'air de suralimentation (3).

2. Dispositif selon la revendication 1, **caractérisé en ce que** le refroidisseur d'air de suralimentation (3) comporte plusieurs tubes (10) s'étendant parallèlement les uns aux autres dans leur direction longitudinale (13) et plusieurs nervures de refroidissement (11) reliées aux tubes (10) de manière à assurer un transfert de chaleur, une direction de montage (12) dans laquelle le refroidisseur d'air de suralimentation (3) est placé à travers l'ouverture de montage (9) dans la coque de refroidisseur (7) s'étendant alors perpendiculairement à la direction longitudinale (13) des tubes (10).

3. Dispositif selon la revendication 1 ou 2, **caractérisé en ce que** la coque de refroidisseur (7) présente dans une zone éloignée de l'ouverture de montage (9) au moins un contour d'enfoncement (14) qui est ouvert vers l'ouverture de montage (9) et dans lequel plonge un contour d'insertion (15) du refroidisseur d'air de suralimentation (3), contour d'insertion qui passe en avant lors de la mise en place du refroidisseur d'air de suralimentation (3), dans la direction de montage (12).

4. Dispositif selon l'une quelconque des revendications 1 à 3, **caractérisé en ce que** la coque de raccordement (8) comporte au moins un contour de butée (17) qui est proche de l'ouverture de montage (9) et contre laquelle un contour de soutien (18) du refroidisseur d'air de suralimentation (3) vient en butée à l'encontre de la direction de montage (12).

5. Dispositif selon l'une quelconque des revendications 1 à 4, **caractérisé en ce que** la coque de refroidisseur (7) entoure le refroidisseur d'air de suralimentation (3) dans une direction circonférentielle (19) au niveau de trois côtés tandis que le quatrième côté est agencé dans la zone de l'ouverture de montage (9).

6. Dispositif selon l'une quelconque des revendications 1 à 5, **caractérisé en ce que** la coque de raccordement (8) est en contact avec la coque de refroidisseur (7) par l'intermédiaire d'une liaison languette et rainure (20).

7. Dispositif selon l'une des revendications 1 à 6, **caractérisé en ce qu'**au moins un tirant d'ancrage (22) de ce type est conçu côté amont comme une aube directrice (26) pour l'air de suralimentation, laquelle s'étend courbée dans une zone d'entrée (27) comportant l'entrée d'air de suralimentation (5) et dévie l'air de suralimentation en provenance de l'entrée d'air de suralimentation (5) en direction du refroidisseur d'air de suralimentation (3).

8. Dispositif selon l'une quelconque des revendications 1 à 7, **caractérisé en ce qu'**au moins un tirant d'ancrage (29) côté aval est formé de manière intégrée sur la coque de raccordement (8), lequel tirant d'ancrage est agencé au niveau d'un côté aval (30) du refroidisseur d'air de suralimentation (3) par rapport au sens d'écoulement (55) de l'air de suralimentation et assemble deux parties de paroi (31, 32) qui se font face au niveau du côté aval (30) du refroidisseur d'air de suralimentation (3).

9. Dispositif selon l'une quelconque des revendications 1 à 8, **caractérisé en ce que**
- le refroidisseur d'air de suralimentation (3) comporte un raccord d'entrée (34) qui est destiné à amener un fluide de refroidissement (35) et qui est formé par un embout d'entrée (38) séparé par rapport au refroidisseur d'air de suralimentation (3) et par rapport au module d'aspiration (2), lequel embout d'entrée pénètre dans une ouverture d'entrée (41) réalisée au niveau du refroidisseur d'air de suralimentation (3) en passant à travers une ouverture de passage d'entrée (40) réalisée dans le carter (4) du module d'aspiration (2), et/ou
- le refroidisseur d'air de suralimentation (3) comporte un raccord de sortie (36) qui est destiné à évacuer un fluide de refroidissement (37) et qui est formé par un embout de sortie (39) séparé par rapport au refroidisseur d'air de suralimentation (3) et par rapport au module d'aspiration (2), lequel embout de sortie pénètre dans une ouverture de sortie (43) réalisée au niveau du refroidisseur d'air de suralimentation (3) en passant à travers une ouverture de passage de sortie (42) réalisée dans le carter (4).

10. Dispositif selon l'une quelconque des revendications 1 à 9, **caractérisé en ce qu'**un dispositif de clapet (51) est monté au niveau de la coque de raccordement (8) dans la zone de la sortie d'air de suralimentation (6).

11. Dispositif selon l'une quelconque des revendications 1 à 10, **caractérisé en ce que** le module d'aspiration (2) est fabriqué en plastique tandis que le refroidisseur d'air de suralimentation (3) est fabriqué en métal.

12. Dispositif selon l'une quelconque des revendications 1 à 11, **caractérisé en ce qu'**un sens d'écoulement principal (55) de l'air de suralimentation dans le refroidisseur d'air de suralimentation (3) s'étend parallèlement à la direction de montage (12) mais est orienté dans le sens contraire.

13. Dispositif selon l'une quelconque des revendications 1 à 12, **caractérisé en ce que** la coque de refroidisseur (7) comporte dans une zone éloignée de l'ouverture de montage (9) au moins une nervure de fixation (56) qui s'étend parallèlement à la direction longitudinale (13) des tubes (10), qui s'éloigne à l'encontre du sens de montage (12) et qui pénètre dans le refroidisseur d'air de suralimentation (3) entre des tubes (10) voisins.
